# EUROPÄISCHE PATENTSCHRIFT

(11) **EP 0 312 094 B1**
(45) Veröffentlichungstag und Bekanntmachung des Hinweises auf die Patenterteilung: **04.08.1993**
(21) Anmeldenummer: 88117131.8
(22) Anmeldetag: 14.10.1988
(51) Int. Cl.: G02B 27/00

(54) **Bildwiedergabeeinrichtung für Kraftfahrzeuge**
Vehicle head-up display
Système de visualisation à tête haute pour véhicules

(30) Priorität: 16.10.1987 DE 3735124
(43) Veröffentlichungstag der Anmeldung: 19.04.1989
(73) Patentinhaber: Bayerische Motoren Werke Aktiengesellschaft, 80788 München (DE)
(72) Erfinder: Weishaupt, Walter, D-8000 München 60 (DE); Jost, Michael, D-8044 Unterschleissheim (DE)
(74) Vertreter: Bullwein, Fritz

(56) Entgegenhaltungen:
- EP-A- 0 216 692
- WO-A-86/05648
- FR-A- 2 559 738
- GB-A- 1 297 139
- GB-A- 2 204 713
- US-A- 3 902 794
- US-A- 4 190 832

## Beschreibung

Die Erfindung bezieht sich auf eine Bildwiedergabeeinrichtung nach dem Oberbegriff des Patentanspruchs 1.

Derartige Einrichtungen, die auch unter der Bezeichnung "head-up-display" bekannt sind, sind beispielsweise aus der EP 0 216 014 A, der DE 35 32 120 A und der WO 86/05648 bekannt. Bei diesen Einrichtungen befinden sich der Bilderzeuger und die Linse im Bereich des Armaturenbretts des Kraftfahrzeugs. Aufgrund der räumlich beengten Einbauverhältnisse führt dies zu erheblichen konstruktiven Problemen.

Diese werden erschwert, wenn es erforderlich ist, zusätzliche Einrichtungen zur Anpassung des virtuellen Bildes an den jeweiligen Fahrzeugbenutzer oder zur Veränderung der bevorzugt in größerer Entfernung vor dem Kraftfahrzeug liegenden Bildweite dieses Bildes vorzusehen.

Der Erfindung liegt die Aufgabe zugrunde, eine Bildwiedergabeeinrichtung der eingangs genannten Art zu schaffen, die auf konstruktiv einfache Weise mit geringstmöglichen Platzbedarf im Bereich des Armaturenbretts innerhalb des Kraftfahrzeugs unterzubringen ist.

Die Erfindung löst diese Aufgabe durch die kennzeichnenden Merkmale des Patentanspruchs 1.

Im Bereich des Armaturenbretts ist nunmehr lediglich der Spiegel vorgesehen, der beispielsweise nur als ebener Körper geringer Dicke ausgebildet sein kann. Daneben ist es möglich, den Platzbedarf des Spiegels durch Ausgestaltung als holographisches optisches Element - in diesem Fall entspricht der Platzbedarf dem einer dünnen Folie - oder als Fresnel-Spiegel auszubilden. Die Form eines derart ausgebildeten spiegelnden Elements kann dann der Oberfläche des Armaturenbretts angepaßt sein und beispielsweise unmittelbar auf diese aufliegen.

Die Unterbringung des Erzeugers für das reale Bild und der Linse im oberen Bereich der Windschutzscheibe bietet den Vorteil, über einen relativ großen Bauraum zu verfügen, der bisher allenfalls für eine Sonnenblende genutzt wird. In diesen Bauraum läßt sich ggf. auch die Möglichkeit realisieren, das virtuelle Bild in der genannten Weise zu verändern.

Eine weitere Verbesserung der Erfindung wird dadurch erzielt, daß der Spiegel als Kollimator ausgebildet ist. Dadurch wird es möglich, insbesondere in Verbindung mit der Linse ein virtuelles Bild zu erzeugen, das in einiger Entfernung vor dem Kraftfahrzeug bzw. sogar im Unendlichen liegt. Dadurch entfällt eine Akkomodation des menschlichen Auges, da das virtuelle Bild in einem Entfernungsbereich liegt, in der der Fahrzeugbenutzer das Verkehrsgeschehen wahrnimmt.

Auch ein derartiger Kollimator-Spiegel kann in Form eines holographisch optischen Elements oder eines Fresnel-Spiegels ausgebildet sein. Letzterer ist analog zu der bekannten Fresnel-Linse durch ringförmige Teilabschnitte gebildet, die im Querschnitt stufenförmig aneinander anschließen.

Als Bilderzeuger kann beispielsweise eine Flüssigkristall(LCD-)-Anzeigeeinrichtung dienen. Eine derartige Einrichtung zeichnet sich durch geringen Platzbedarf aus. Sie bietet ferner die Möglichkeit, mit Hilfe einer unterlegten Fremdlichtquelle eine variable Leuchtstärke zu liefern. Diese kann an die Umgebungshelligkeit angepaßt sein, um stets einen ausreichenden Kontrast zu realisieren. Hierzu kann mit Hilfe einer bekannten Fotodiode die Umgebungshelligkeit bestimmt werden und in ein entsprechendes Steuersignal zur Helligkeitseinstellung der Fremdlichtquelle umgesetzt werden.

Alternativ kann bei Tage die LCD-Beleuchtung auch mit Tageslicht erfolgen, welches über einen Lichtsammler aufgenommen und über einen Lichtleiter zum LCD geleitet wird.

Die bereits genannten Mittel zur Variation der Lage oder Bildweite des virtuellen Bildes lassen sich auf konstruktiv besonders einfache Weise mit Hilfe zweier konvexer Linsenelement realisieren, die in ihrem gegenseitigen Abstand veränderlich sind. Dabei liegt das reale Bild in der Brennebene des im Strahlengang ersten Linsenelements. Auch derartige Linsenelemente können wiederum auch als holographisch optische Elemente oder Fresnel-Linsen ausgebildet sein. Durch die Variation des gegenseitigen Abstands der beiden Linsen wird das von der zweiten Linse erzeugte reelle Zwischenbild in seinem Abstand vom Kollimator verändert. Dadurch ergibt sich auch eine Änderung des für den Fahrzeugbenutzer sichtbaren virtuellen Bildes hinsichtlich seiner Größe bzw. seiner Entfernung.

Diese Darstellung des virtuellen Bildes in der Entfernung kann konstruktiv besonders vorteilhaft durch die Merkmale des Patentanspruchs 6 erreicht werden. Aufwandsmäßig günstige Mittel zur Variation der Entfernung finden sich im Patentanspruch 7.

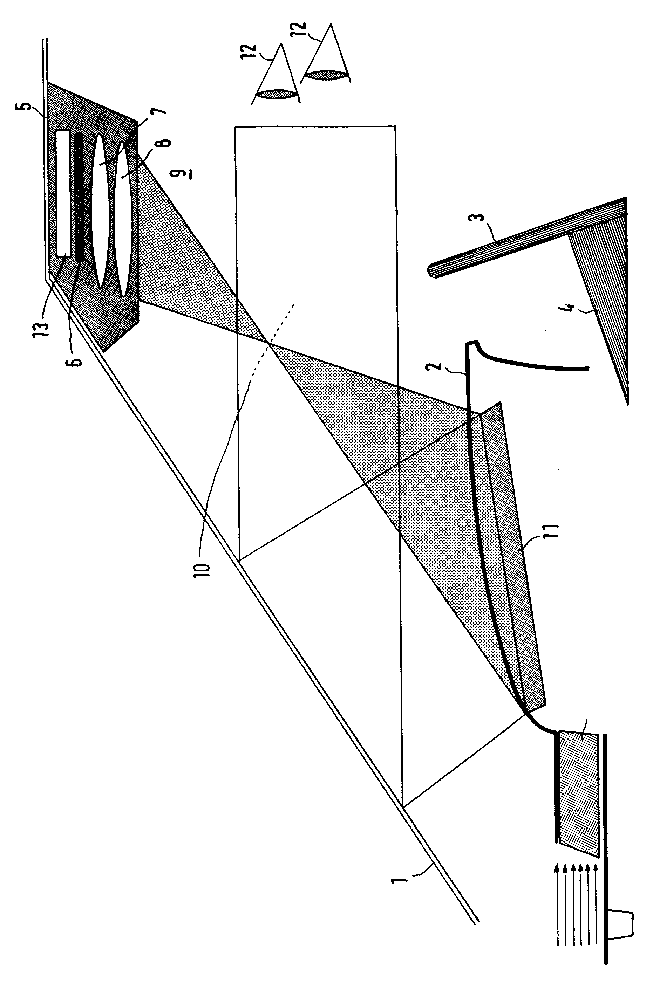

In der Zeichnung ist ein Ausführungsbeispiel der Erfindung dargestellt.

In der einzigen Figur ist im Schnitt ein Ausschnitt aus der Vorderpartie des Innenraums eines Kraftfahrzeugs dargestellt. In diesem befindet sich eine Windschutzscheibe 1, ein Armaturenbrett 2 sowie ein Lenkrad 3 mit einer Lenksäule 4.

Im Übergangsbereich der Windschutzscheibe 1 zum Dach 5 befindet sich ein Bilderzeuger 6 in Form einer Flüssigkristall-Matrix für ein reales Bild sowie eine aus zwei hintereinander angeordneten konvexen Linsenelemente 7 und 8 bestehende Linse 9. Hinter dem Bilderzeuger 6 befindet sich eine Lichtquelle 13, die entsprechend der Umgebungshelligkeit gesteuert wird.

Der Bilderzeuger 6 sitzt in der Brennebene des ersten Linsenelements 7. Aufgrund der optischen Abbildungseigenschaften erzeugt das Linsenelement 7 von jedem Bildpunkt des Bilderzeugers 6 ein paralleles, lediglich durch die Abmessungen des Linsenelements 7 begrenztes Strahlenbündel.

Durch das Linsenelement 8 werden diese Strahlenbündel in dessen Brennebene als Zwischenbild abgebildet. Dieses Zwischenbild 10 gelangt über einen Hohlspiegel 11 und die Windschutzscheibe 1 in das Auge 12 eines Fahrzeugbenutzers.

In geeigneter Weise kann beispielsweise mit Hilfe einer vergüteten Oberfläche, z.B. einer λ/4-Antireflexbeschichtung blendfrei gehalten und lediglich für das vom Bilderzeuger 6 ausgehende Licht durchlässig sein. Im Falle einer planen Windschutzscheibe 1 sorgt der Spiegel 11 allein, im Falle einer gewölbten Windschutzscheibe 1 in Verbindung mit dieser dafür, daß das von der Windschutzscheibe 1 reflektierte, zum Kraftfahrzeugbenutzer gerichtete Licht weitgehend parallel entsprechend der gewünschten virtuellen Entfernung ausgerichtet ist. Entsprechend den optischen Abbildungseigenschaften ist es damit möglich, das Zwischenbild in einer Entfernung erscheinen zu lassen, die zumindest annähernd der tatsächlichen Entfernung des für den Kraftfahrzeugbenutzer maßgeblichen Sichtfeldes ist. Es handelt sich dabei um eine Entfernung von beispielsweise 15 bis 20 m vor dem Kraftfahrzeug bzw. um unendlich.

Durch Variation des Abstands des Linsenelements 8 vom Linsenelement 7 wird es möglich, das Zwischenbild 10 in Richtung des Hohlspiegel 11 zu verschieben und damit dessen Größe im Auge 12 des Kraftfahrzeugbenutzers zu vermindern. Durch die schräge Lage des Zwischenbildes 10 bezüglich der optischen Achse des Hohlspiegels 11 läßt sich erreichen, daß die virtuelle Entfernung der Darstellung am Ort des Betrachters in Abhängigkeit von der Höhe zunimmt, wodurch der räumliche Ausdruck betont wird.

Durch die Anordnung des Bilderzeugers 6 und der Linsenelemente 7 und 8 am oberen Rand der Windschutzscheibe 1 zusammen mit dem Bilderzeuger 6 lassen sich die für die Bildwiedergabeeinrichtung wesentlichen Elemente in einem Bereich unterbringen, der weitgehend ungenutzt ist. Darüber hinaus läßt sich durch die relativ große Entfernung zur Windschutzscheibe 1 das gebildete virtuelle Bild in weiten Grenzen den jeweiligen Gegebenheiten sowohl hinsichtlich des Kraftfahrzeugs als auch hinsichtlich des Kraftfahrzeugbenutzers anpassen. Der Platzbedarf im Bereich des Armaturenbretts 2 ist lediglich auf den des Spiegels 11 beschränkt und kann bei geeigneter Auswahl bzw. Anpassung dieses Spiegels, beispielsweise durch Ausbildung in Form eines holographisch optischen Elements besonders gering gehalten werden. Ein derartiges Element kann in seiner Kontur der Oberfläche des Armaturenbretts 2 angepaßt sein und beispielsweise auf dieser aufliegen. Gleichzeitig wird durch eine entsprechende farbliche Hervorhebung bzw. Beschichtung eine störende Reflexion von Umgebungslicht über diesen Spiegel 11 ins Auge des Betrachters vermieden. Die mögliche Anpassung der Leuchtstärke des Bildes 6 mit Hilfe des Lichterzeugers der Lichtquelle 13 bietet darüber hinaus die Gewähr, daß das virtuelle Bild im Auge des Betrachters 12 stets die Helligkeit des Umgebungslichts überstrahlt und somit praktisch in jedem Fall wahrgenommen werden kann.

## Patentansprüche

1. Bildwiedergabeeinrichtung zur Erzeugung eines virtuellen Bildes im Blickfeld des Benutzers eines Fahrzeugs, mit einem im Fahrzeug angeordneten Bilderzeuger (6), einer im Fahrzeug angeordneten Abbildungslinse (9) und einem von der Windschutzscheibe (1) des Fahrzeugs gebildeten spiegelnden Element im Strahlengang von der Abbildungslinse zum Benutzer,
**dadurch gekennzeichnet, daß**
der Bilderzeuger und die Linse im Übergangsbereich der Windschutzscheibe zum Dach (5) des Fahrzeugs liegen, und daß ein Spiegel (11) im Bereich der Oberfläche des Armaturenbretts (2) des Fahrzeugs im Strahlengang zwischen Linse und Windschutzscheibe angeordnet ist.

2. Bildwiedergabeeinrichtung nach Anspruch 1, dadurch gekennzeichnet, daß der Spiegel als Kollimator (Hohlspiegel 11) ausgebildet ist.

3. Bildwiedergabeeinrichtung nach Anspruch 1 oder 2, dadurch gekennzeichnet, daß der Spiegel ein holographisch optisches Element ist.

4. Bildwiedergabeeinrichtung nach Anspruch 1 oder 2, dadurch gekennzeichnet, daß der Spiegel ein Fresnelspiegel ist.

5. Bildwiedergabeeinrichtung nach den Ansprüchen 1 bis 4, dadurch gekennzeichnet, daß der Bilderzeuger das Bild mittels einer Flüssigkristallfolie erzeugt.

6. Bildwiedergabeeinrichtung nach einem der Ansprüche 1 bis 5, dadurch gekennzeichnet, daß die Linse (9) zwei in ihrem gegenseitigen Abstand veränderliche konvexe Linsen bzw. holographisch optische Elemente enthält, wobei das Bild in der Brennebene der ersten Linse bzw. des ersten holographisch optischen Elements liegt.

## Claims

1. An image-reproducing device for generating a virtual image in the field of vision of the user of a vehicle, comprising an image generator (6) disposed in the vehicle, an image-forming lens (9) disposed in the vehicle and a reflecting element formed by the windscreen (1) of the vehicle and disposed in the path of rays from the image-forming lens to the user, characterised in that the image generator and the lens are disposed in the transition region from the windscreen to the vehicle roof (5), and a mirror (11) is disposed on the surface of the vehicle dashboard (2) in the path of rays between the lens and the windscreen.

2. An image-reproducing device according to claim 1, characterised in that the mirror is a collimator (concave mirror 11).

3. An image-reproducing device according to claim 1 or 2, characterised in that the mirror is a holographic optical element.

4. An image-reproducing device according to claim 1 or 2, characterised in that the mirror is a Fresnel mirror.

5. An image-reproducing device according to claims 1 to 4, characterised in that the image generator generates the images by means of a liquid crystal foil.

6. An image-reproducing device according to any of claims 1 to 5, characterised in that the lens (9) contains two variable-spacing convex lenses or holographic optical elements, the image being in the focal plane of the first lens or of the first holographic optical element.

## Revendications

1. Système de visualisation à tête haute fournissant une image virtuelle dans le champ de vision de l'utilisateur d'un véhicule comportant un générateur d'images (6) monté dans le véhicule ainsi qu une lentille (9) de projection de l'image et un élément réfléchissant constitué par le pare-brise interposé sur le trajet des rayons lumineux allant de la lentille à l'utilisateur, caractérisé en ce que le générateur d'images et la lentille sont montés au niveau du raccordement du pare-brise au toit du véhicule, tandis qu'un miroir (11), situé sur la face supérieure du tableau de bord (2) est intercalé sur le trajet des rayons lumineux entre la lentille et le pare-brise.

2. Système de visualisation selon la revendication 1, caractérisé en ce que le miroir est un collimateur (miroir concave 11).

3. Système de visualisation selon la revendication 1 ou 2, caractérisé en ce que le miroir est un élément optique holographique.

4. Système de visualisation selon la revendication 1 ou 2, caractérisé en ce que le miroir est un miroir de Fresnel.

5. Système de visualisation selon les revendication 1 à 4, caractérisé en ce que le générateur d'images produit son image par l'intermédiaire d'une pellicule à cristaux liquides.

6. Système de visualisation selon une des revendications 1 à 5, caractérisé en ce que la lentille (9) est un système optique comportant deux lentilles convexes à espacement variable ou des éléments optiques holographiques, l'image étant générée dans le plan focal de la première lentille ou du premier élément optique holographique.
